# EUROPÄISCHE PATENTSCHRIFT

(11) **EP 2 137 452 B1**
(45) Veröffentlichungstag und Bekanntmachung des Hinweises auf die Patenterteilung: **25.09.2019**
(21) Anmeldenummer: 08736359.4
(22) Anmeldetag: 18.04.2008
(51) Int. Cl.: F16N 25/00, F15D 1/14, F16N 7/32

(54) **VORRICHTUNG ZUM AUFTEILEN EINES MITTELS EINES GASSTROMS GEFÖRDERTEN SCHMIERSTOFFSTROMS UND MIT EINER SOLCHEN VORRICHTUNG AUSGESTATTETE MASCHINE**
DEVICE FOR DISTRIBUTING A LUBRICANT FLOW TRANSPORTED BY MEANS OF A GAS FLOW, AND MACHINE PROVIDED WITH SUCH A DEVICE
DISPOSITIF DE RÉPARTITION D'UN FLUX DE LUBRIFIANT TRANSPORTÉ AU MOYEN D'UN FLUX DE GAZ ET MACHINE POURVUE D'UN TEL DISPOSITIF

(30) Priorität: 26.04.2007 DE 102007019653
(43) Veröffentlichungstag der Anmeldung: 30.12.2009
(73) Patentinhaber: Rebs Zentralschmiertechnik GmbH, 40885 Ratingen (DE)
(72) Erfinder: REBS, Alexander, A., 40885 Ratingen (DE); SCHWARZE, Hermann, 42579 Heiligenhaus (DE)
(74) Vertreter: Cohausz & Florack
(86) Internationale Anmeldenummer: PCT/EP2008/054709
(87) Internationale Veröffentlichungsnummer: WO 2008/132070

(56) Entgegenhaltungen:
- DE-A1- 19 622 379
- DE-A1- 19 844 650
- DE-A1-102005 010 132
- DE-U1- 29 613 087

## Beschreibung

Die Erfindung betrifft eine Vorrichtung zum Aufteilen eines mittels eines Gasstroms, insbesondere eines Luftstroms, geförderten Schmierstoffstroms mit einem Verteilkörper, der eine Vielzahl von Zuströmbohrungen, die von seiner einen Stirnfläche ausgehen und sich längs seiner Längsachse und achsparallel zueinander erstrecken, und Abströmbohrungen aufweist, die jeweils mit einer der Zuströmbohrungen verbunden sind und auf einer Umfangsfläche des Verteilkörpers münden. Darüber hinaus betrifft die Erfindung eine mit einer solchen Vorrichtung ausgestattete Maschine.

In Schmiersystemen, die mit Verteilvorrichtungen der voranstehend angegebenen Art ausgestattet sind, wird der zu verteilende Schmierstoff durch die Leitungen des Systems mittels eines turbulent strömenden Gasstroms, bei dem es sich in der Praxis üblicherweise um einen Luftstrom handelt, zu den jeweiligen Schmierstellen getrieben. Der Schmierstoff bildet dabei auf den Leitungswänden aufgrund der koaxial zum Leitungsverlauf gerichteten turbulenten Gasströmung einen dünnen Film aus, der eine gleichmäßige Wellenstruktur aufweist. Aufgrund der Reibung zwischen den aneinander anliegenden Grenzschichten von Gas und Schmierstoff sowie das Aufprallen der Gasströmung auf die Wellenberge wird der Schmierstofffilm vorangetrieben, ohne dass es zu einer Vermischung des Gases mit dem Schmierstoff kommt.

Der wesentliche Vorteil eines derartigen Transports von Schmiermittel zu den Schmierstellen besteht darin, dass der Transport auch kleinster Schmierstoffmengen lageunabhängig, insbesondere unbeeinflusst von der Schwerkraft erfolgen kann. Dies ermöglicht eine exakte Ausbringung von genau dosierten Schmierstoffmengen an der jeweiligen Schmierstelle.

Um bei einerseits minimiertem apparativen Aufwand und andererseits ebenso minimiertem Leistungsbedarf für die Lufterzeugung eine einwandfreie Versorgung aller Schmierstellen sicherzustellen, wird die benötigte Gesamtmenge an Schmierstoff zunächst über eine einzige Versorgungsleitung gefördert und erst kurz vor Erreichen der jeweiligen Schmierstellen auf eine den jeweiligen Schmierstellen entsprechende Anzahl von Teilströmen verteilt. Zu diesem Zweck ist aus der Europäischen Patentschrift EP 0 010 269 B1 eine Verteilvorrichtung bekannt, bei der die Zuführleitung in einer zylindrischen Verteilkammer mündet, die eine Vielzahl von in ihre Umfangsfläche eingeformte, in gleichen Winkelabständen symmetrisch um die Längsachse der Verteilkammer angeordnete Abströmbohrungen aufweist.

Aus den Abströmbohrungen sind Gruppen gebildet, denen jeweils eine gleiche Anzahl von in gleichen Winkelabständen zueinander beabstandeten Abströmbohrungen zugeordnet ist. Jede Gruppe von Abströmbohrungen versorgt eine Schmierstelle. Auf diese Weise wird eine gleichmäßige Aufteilung der Schmierstoffmenge auf die zu versorgenden Schmierstellen erreicht. Die symmetrische Aufteilung der Abströmbohrungen stellt dabei sicher, dass die durch den Einfluss der Schwerkraft verursachten Ungleichförmigkeiten auf ein Minimum reduziert sind. Je größer die Anzahl von Bohrungen, desto besser ist die erzielte Gleichmäßigkeit der Verteilung.

Um Verteilvorrichtungen der voranstehend erläuterten Art bei optimiertem Verteilergebnis problemlos nachträglich in bestehenden Maschinen montieren zu können, ist in der EP 0 902 868 B1 vorgeschlagen worden, eine solche Verteilvorrichtung mit einem rohrförmigen Gehäuse auszustatten, an dessen beiden Stirnseiten jeweils eine Aufnahme ausgebildet ist, von denen die erste zur Aufnahme eines zuströmungsseitigen Anschlusselements und die zweite zur Aufnahme eines zweiten Anschlusselements bestimmt ist.

Das rohrförmige, zylindrische Gehäuse erlaubt es problemlos, die bekannte Vorrichtung in eine entsprechend dimensionierte Bohrung des Gehäuses der mit ihr auszustattenden Maschine einzuschieben. Auf diese Weise kann die bekannte Vorrichtung auch an ansonsten schwer zugänglichen oder räumlich begrenzten Stellen einer größeren Anlage montiert werden.

So lassen sich beispielsweise Walzgerüste oder ähnliche Maschinen auch nachträglich mit der bekannten Vorrichtung ohne größere Schwierigkeiten ausstatten. Die bekannten Vorrichtungen haben sich in der Praxis insoweit bewährt. Insbesondere ist es mit ihnen möglich, den für die Verlegung der Verbindungsleitungen zwischen der jeweiligen Verteilvorrichtung und den an sie angeschlossenen Schmierstellen erforderlichen Aufwand auf ein Minimum zu reduzieren.

Die immer stärker steigenden Anforderungen an die Präzision, mit der die Schmierstoffversorgung der Schmierstellen von Maschinen heutzutage durchgeführt werden muss, sowie die dabei an unterschiedlichste Stellen zu transportierenden Schmierstoffmengen machen bei Gas/Schmierstoff-Verteileinrichtungen der in Rede stehenden Art immer größere Gas- und Schmierstoffvolumenströme erforderlich. Um diese sicher transportieren zu können, sind große Leitungsquerschnitte mit dementsprechend großen Außenumfängen der Verbindungsleitungen erforderlich. Dies gilt insbesondere für die Verbindungsleitungen, über die der Gas/Schmierstoffstrom zu dem jeweiligen Verteiler geleitet wird, wenn es sich bei dem betreffenden Verteiler um einen Vorverteiler handelt, an dessen Abströmbohrungen wiederum weitere Verteiler angeschlossen sind.

Ausgehend von dem voranstehend erläuterten Stand der Technik bestand die Aufgabe der Erfindung darin, eine Verteilvorrichtung der eingangs angegebenen Art zu schaffen, die einerseits auf einfache Weise montierbar ist und es andererseits erlaubt, große Volumenströme auf eine große Anzahl von Abströmbohrungen zu verteilen. Ebenso sollte eine besonders vorteilhafte Verwendung einer solchen Maschine angegeben werden.

In Bezug auf die Vorrichtung ist diese Aufgabe durch eine Verteilvorrichtung gelöst worden, die erfindungsgemäß mit den in Anspruch 1 angegebenen Merkmalen ausgestattet ist. Vorteilhafte Ausgestaltungen der Erfindung sind in den auf Anspruch 1 rückbezogenen Ansprüchen angegeben.

Besonders vorteilhaft verwenden lässt sich eine erfindungsgemäße Verteilvorrichtung in einer gemäß Anspruch 16 ausgebildeten Vorrichtung.

Gemäß der Erfindung ist mindestens einer der Abströmbohrungen des bei einer erfindungsgemäßen Vorrichtung vorhandenen Verteilkörpers ein auf den Verteilkörper aufgeschobener Adapterring zugeordnet. Dieser Adapterring überdeckt die ihm jeweils zugeordnete Abströmbohrung, indem seine Breite eine Teillänge des Verteilkörpers abdeckt, die größer ist als der Durchmesser der betreffenden Abströmöffnung. Gleichzeitig weist der Adapterring mindestens eine Durchtrittsöffnung auf, durch die der aus der ihm zugeordneten Abströmbohrung austretende Schmierstoff/Gasstrom tritt.

Mittels der erfindungsgemäß auf den Verteilkörper aufgeschobenen Adapterringe lässt sich eine erfindungsgemäße Vorrichtung problemlos auch in Öffnungen montieren, die einen großen Durchmesser besitzen, um Zuströmleitungen mit einem für die Zuleitung großer Volumenströme ausreichend großen Umfang aufnehmen zu können. Dabei können die Adapterringe ohne Weiteres so ausgelegt sein, dass durch ihre Durchtrittsöffnungen auch große Gas- und Schmierstoffströme getrieben werden können.

Gleichzeitig erlauben es die erfindungsgemäß eingesetzten Adapterringe auf einfache Weise, die für eine optimale Zuleitung der den einzelnen an den Verteiler angeschlossenen Schmierstellen oder nachgeordneten Verteilern zugeordneten Schmierstoff-Teilströme erforderliche gegenseitige Abdichtung der Austrittsöffnungen des Verteilkörpers gegenüber der Innenwand einer Aufnahmebohrung, in der die erfindungsgemäße Vorrichtung montiert wird.

Ein besonderer Vorteil der Erfindung besteht dabei darin, dass konventionell ausgebildete und dimensionierte Verteilkörper zum Aufteilen der großen Schmierstoff/Gasmengen verwendet werden können. Diese lassen sich mit Hilfe der Adapterringe auch in solche Öffnungen einsetzen, deren Innendurchmesser deutlich größer ist als der Außendurchmesser des jeweiligen Verteilkörpers.

Gleichzeitig erlaubt die Erfindung eine besonders einfache Montage. So lassen sich die Adapterringe unabhängig von dem Verteilkörper in die jeweilige Aufnahme des zu bestückenden Maschinengehäuses einschieben. Anschließend kann dann der Verteilkörper in die bereits fertig positionierten Adapterringe eingeschoben werden. Es sind keine speziell geformten Hilfswerkzeuge erforderlich. Vielmehr ist durch die Erfindung sichergestellt, dass der Verteilkörper mit den Adapterringen auch bei sehr tiefen Aufnahmebohrungen stets sicher den für ihn vorgesehenen Platz einnimmt und dort gehalten ist.

Grundsätzlich ist es möglich, an einem Verteilkörper einer erfindungsgemäßen Vorrichtung Adapterringe jeweils so zu positionieren, dass im montierten Zustand nur an den für die korrekte Ausrichtung des Verteilkörpers und die Trennung der einzelnen von ihm versorgten Schmierstellen erforderlichen Stellen eine Abdichtung des Verteilkörpers zur Innenwand der jeweiligen Maschinenöffnung hergestellt ist, in der die Vorrichtung angeordnet ist. Im Hinblick auf eine möglichst einfache und sichere Montage ist es jedoch vorteilhaft, wenn die Adapterringe dicht an dicht angeordnet sind, so dass der Verteilkörper im Wesentlichen über seine gesamte Länge durch erfindungsgemäße Adapterringe abgedeckt ist.

Auch wenn es grundsätzlich möglich wäre, die Adapterringe beispielsweise durch Aufschrumpfen oder ähnliches dicht auf dem Verteilkörper zu positionieren, ist es ebenfalls im Hinblick auf eine möglichst einfache Montierbarkeit vorzuziehen, wenn jeder Adapterring mit seiner Innenumfangsfläche über jeweils eine zusätzliche Dichtung gegenüber der äußeren Umfangsfläche des Verteilkörpers abgedichtet ist.

Aus demselben Grund ist es günstig, wenn jeder Adapterring an seinem äußeren Umfang eine Dichtung trägt. Dabei kann an den Adapterringen jeweils ein Formelement vorgesehen sein, welches die jeweilige Dichtung bereits im vormontierten Zustand so hält, dass sie beim Einschieben der erfindungsgemäßen Vorrichtung in die jeweilige Aufnahme ihre Position beibehält und in der Endstellung optimal angeordnet ist.

Die lagerichtige und dichte Montage der Adapterringe auf dem Verteilkörper kann gemäß einer vorteilhaften Ausgestaltung der Erfindung auch dadurch unterstützt werden, dass in die Außenumfangsfläche mindestens eines der Adapterringe ein umlaufender äußerer Absatz eingeformt ist, der an die eine Stirnseite dieses Adapterrings angrenzt, und dass in die Innenumfangsfläche mindestens eines der Adapterringe ein an eine der Stirnseiten dieses Adapterrings angrenzender umlaufender innerer Absatz eingeformt ist, dessen Innendurchmesser an den Außendurchmesser des umlaufenden Absatzes des anderen Adapterrings angepasst ist. Die derart ausgebildeten Adapterringe lassen sich so aufeinander schieben, dass sie im zusammengesetzten Zustand im Bereich ihrer Absätze einander überlappen. Dies erleichtert nicht nur die Abdichtung gegenüber der Innenwand der Aufnahme des Maschinengehäuses und der Außenwand des Verteilkörpers, sondern führt auch zu einem besonders stabilen Halt der Adapterringe auf dem Verteilkörper.

So lässt sich beispielsweise dann, wenn mehr als zwei Adapterringe vorhanden sind und mindestens einer der Adapterringe einen an seine eine Stirnseite angrenzenden äußeren Absatz und einen an seine andere Stirnseite angrenzenden inneren Absatz aufweist, mit den derart gestalteten Adapterringen eine Hülse zusammensetzen, die sicher auf dem Verteilkörper sitzt und ihn insgesamt abdeckt.

Besonders günstig im Hinblick auf die Montage und Demontage einer erfindungsgemäßen Vorrichtung erweist es sich in diesem Zusammenhang, wenn in die Umfangsfläche des äußeren Absatzes mindestens eines der Adapterringe eine umlaufende Kehle eingeformt ist, die als Sitz für einen O-Ring dient. Für die Montage lässt sich in diese Kehle eine O-Ring-Dichtung einlegen. Beim anschließenden Einschieben in die jeweilige Aufnahmeöffnung des zu bestückenden Maschinengehäuses bleibt der O-Ring in der Kehle liegen, bis der Adapterring auf den zuvor in die Aufnahmeöffnung geschobenen Adapterring trifft und zwischen dessen Stirnseite und der Fußfläche des jeweiligen äußeren Absatzes so gepresst wird, dass er dicht an der Innenumfangswand der Aufnahmeöffnung anliegt. Werden die Adapterringe zur Demontage wieder aus der jeweiligen Aufnahmeöffnung gezogen, gleiten die Ring-Dichtungen wieder zurück in die Kehle des ihnen jeweils zugeordneten Adapterstücks und werden von diesem aus der Aufnahmeöffnung mitgenommen. Besonders sicher lässt sich dieser Effekt erreichen, wenn die zwischen der Kehle und der Fußfläche des Absatzes verbleibende Breite der Umfangsfläche des äußeren Absatzes mindestens so groß ist wie die Breite der Kehle.

Eine weitere Vereinfachung der Montage einer erfindungsgemäßen Vorrichtung lässt sich dadurch erreichen, dass in die äußere Umfangsfläche mindestens eines der Adapterringe eine Ringnut eingeformt ist, in deren Grund die Durchtrittsöffnung mündet. Über die Ringnut wird der aus der Durchtrittsöffnung austretende Gas/Schmierstoff-Strom unabhängig von der jeweiligen Lage der Durchtrittsöffnung zur jeweiligen Verbindungsleitung geleitet, die zu der zu versorgenden Schmierstelle führt. Eine besondere Ausrichtung des Adapterrings in Umfangsrichtung ist damit nicht mehr erforderlich.

Aus demselben Grund ist es günstig, wenn in die innere Umfangsfläche mindestens eines der Adapterringe eine Ringnut eingeformt ist, in deren Grund die Durchtrittsöffnung mündet. Auch in diesem Fall führt die Ringnut den Schmierstoff/Gasstrom unabhängig von der Lage der Abströmöffnungen der Verteilkammer zu der jeweils zugeordneten Durchtrittsöffnung. Demselben Zweck dient es, wenn die Abströmöffnungen der Abströmbohrungen des Verteilkörpers jeweils im Grund einer in die äußere Umfangsfläche des Verteilkörpers eingeformten Ringnut angeordnet sind. Dabei können durch eine Kombination dieser beiden Ausgestaltungen Ringkanäle gebildet werden, durch die große Volumenströme problemlos strömen können.

Lange Verteilkörper, über die viele Schmierstellen gleichzeitig versorgt werden können, lassen sich in an sich bekannter, in der DE 10 2005 010 132 A1 beschriebenen Weise dadurch besonders einfach herstellen, dass der Verteilkörper in mindestens zwei Teile geteilt ist, die mittels eines Spannmittels miteinander dicht verkoppelt sind. Um dabei eine lagerichtige Zuordnung der Teile zu gewährleisten, sollte an den Teilen des Verteilkörpers in ebenfalls bekannter Weise jeweils ein Formelement ausgebildet sein, welches die lagerichtige Anordnung der Teilkörper im miteinander verspannten Zustand sichert.

Um mehrere erfindungsgemäße Verteilvorrichtungen hintereinander schalten zu können, kann es sinnvoll sein, wenn mindestens eine der Zuströmbohrungen des Verteilkörpers auf der Stirnseite des Verteilkörpers mündet, die der mit den Eintrittsöffnungen der Einströmbohrungen versehenen Stirnseite gegenüberliegt, und an dieser Stirnseite ein Anschlussstück zum Ableiten des aus der betreffenden Zuströmbohrung austretenden Gas/Schmierstoffstroms angeschlossen ist.

Nachfolgend wird die Erfindung anhand einer ein Ausführungsbeispiel darstellenden Zeichnung erläutert. Es zeigen jeweils schematisch:
- Fig. 1: eine als Vorverteiler eingesetzte Verteilvorrichtung in einem Längsschnitt;
- Fig. 2: einen in der in Fig. 1 dargestellten Verteilvorrichtung eingesetzten Verteilkörper in einer frontalen Sicht auf einer seiner Stirnseite;
- Fig. 3: einen Adapterring in einem vergrößerten Längsschnitt;
- Fig. 4a - 4e: die bei der Montage in einem Maschinengestell absolvierten Arbeitsschritte, jeweils in einer längsgeschnittenen Darstellung.

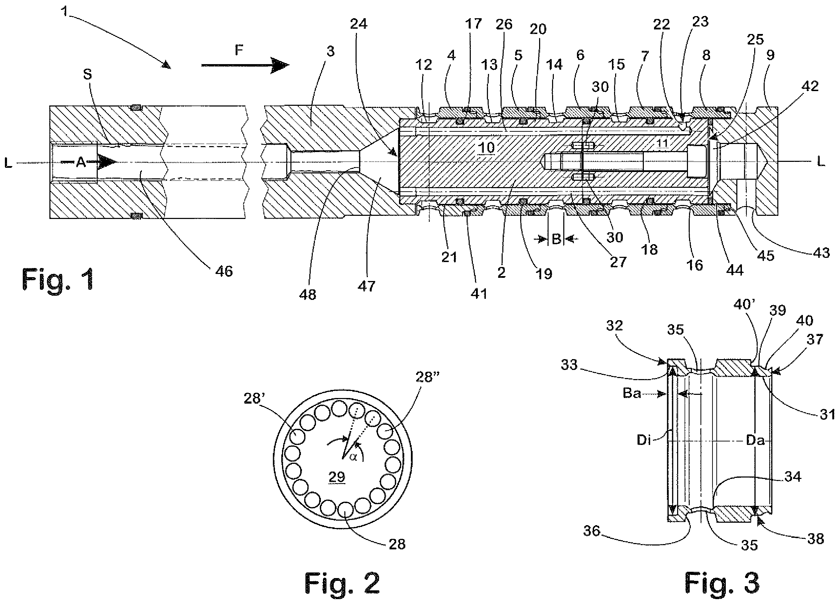

Die in Fig. 1 gezeigte Verteilvorrichtung 1 umfasst einen Verteilkörper 2, ein Anschlussstück 3, fünf Adapterringe 4,5,6,7,8 und ein Abschlussstück 9.

Der zylindrische Verteilkörper 2 ist in an sich bekannter Weise zweigeteilt aus zwei zylindrischen Teilkörpern 10, 11 zusammengesetzt. In die Umfangsfläche des Verteilkörpers 2 sind dabei fünf Umfangsnuten 12, 13, 14, 15, 16 eingeformt, von denen die einen drei Umfangsnuten 12, 13, 14 dem ersten Teilkörper 10 und die beiden anderen Umfangsnuten 15, 16 dem zweiten Teilkörper 11 zugeordnet sind.

Die Breite B der Umfangsnuten 12 - 16 ist identisch. Zwischen den jeweils benachbarten Umfangsnuten 12, 13; 13, 14; 14, 15; 15, 16 ist jeweils eine weitere um den Umfang des Verteilkörpers 2 umlaufende Nut 17, 18 ausgebildet, in der jeweils eine O-Ringdichtung 19 liegt. Die Umfangsnuten 12 - 16 sind von den jeweils zwischen ihnen angeordneten Nuten 17,18 durch um den Umfang des Verteilkörpers 2 umlaufende Stege 20,21 getrennt.

In die Grundfläche jeder Umfangsnut 12 - 16 sind in einem Winkelabstand von 120° um die Längsachse L des Verteilkörpers 2 verteilt die Mündungsöffnungen von jeweils drei Abströmbohrungen eingeformt, von denen in Fig. 1 jeweils nur die in der Schnittebene liegende Abströmbohrung 22 mit ihrer Abströmöffnung 23 sichtbar ist.

Von der in Förderrichtung F vorderen Stirnseite 24 des Verteilkörpers 2 zu jeweils einer der Abströmbohrungen führende Zuströmbohrungen sind in gleichen Winkelabständen α symmetrisch um die Längsachse L des Verteilkörpers 2 herum verteilt positioniert. Drei der Zuströmbohrungen führen dabei direkt durch den Verteilkörper 2 hindurch zu dessen in Förderrichtung F rückwärtigen Stirnseite 25. Von den Zuströmbohrungen sind in Fig. 1 nur die in der Schnittebene liegenden Zuströmbohrungen 26 und 27 gezeigt, von denen die Zuströmbohrung 26 zur Abströmbohrung 22 und die Zuströmbohrung 27 direkt zur rückwärtigen Stirnseite 25 führt.

Die Eintrittsöffnungen 28, 28', 28" der Zuströmbohrungen sind auf der vorderen Stirnfläche 24 des Verteilkörpers 2 um eine Prallfläche 29 verteilt angeordnet.

Entsprechend der Zuordnung der Abströmbohrungen 22 zu den Umfangsnuten 12 - 16 sind die mit ihnen verbundenen Zuströmbohrungen in fünf Gruppen sowie eine sechste Gruppe derjenigen Zuströmbohrungen zusammengefasst, die direkt zur rückwärtigen Stirnseite 25 führen. Die Zuströmbohrungen jeder Gruppe sind dabei in gleichen Winkelabständen von 120° um die Längsachse L verteilt angeordnet. Dies ist in Fig. 2 beispielhaft anhand der dementsprechend auf der vorderen Stirnfläche 24 des Verteilkörpers 2 positionierten Eintrittsöffnungen 28, 28', 28" der Zuströmbohrungen verdeutlicht, die über die mit ihnen jeweils verbundenen Abströmbohrungen zu der fünften Umfangsnut 16 führen.

Entsprechend der Teilung des Verteilkörpers 2 in zwei Teilkörper 10, 11 sind in den ersten Teilkörper 10 achtzehn Zuströmbohrungen eingebracht worden. Der zweite Teilkörper 11 weist demgegenüber nur neun Zuströmbohrungen auf, von denen drei bis zur rückwärtigen Stirnseite 25 und jeweils drei über die mit ihnen jeweils verbundenen Abströmbohrungen zu den Umfangsnuten 15 und 16 führen.

Die lagerichtige Verbindung zwischen den beiden mittels einer Schraube miteinander verspannten Teilkörpern 10, 11 ist durch zwei Stifte 30 gesichert. Die Stifte 30 sitzen mit einer leichten Presspassung in Ausnehmungen, die in die einander zugeordneten Stirnseiten der Teilkörper 10,11 eingeformt sind.

In die Innenumfangsfläche 31 der Adapterringe 4-8 ist ausgehend von deren vorderen Stirnseite 32 jeweils ein erster umlaufender Absatz 33 eingeformt. Zusätzlich ist in die Innenumfangsfläche 31 der Adapterringe 4-8 mit einem Abstand zur vorderen Stirnseite jeweils eine innere Ringnut 34 eingeformt. In die Grundfläche der Ringnut 34 sind gegenüberliegend zueinander zwei zur Außenumfangsfläche führende Durchtrittsöffnungen 35 eingebracht.

In die Außenumfangsfläche der Adapterringe 4-8 ist zudem jeweils eine äußere Ringnut 36 eingebracht. Die Ringnut 36 ist dabei so ausgerichtet, dass die Durchtrittsöffnungen 35 auch in ihrer Grundfläche platziert sind.

Des Weiteren ist in die äußere Umfangsfläche der Adapterringe 4-8 ausgehend von deren rückwärtigen Stirnseite 37 jeweils ein Absatz 38 eingeformt. In den an die Stirnseite 37 angrenzenden Abschnitt der Umfangsfläche 39 des Absatzes 38 ist dabei eine umlaufende Kehle 40 eingeformt, deren Kehlenradius und Breite so bemessen ist, dass eine O-Ring-Dichtung 41 unter leichter Spannung sicher in ihr sitzt. Die Breite Ba der Umfangsfläche 39 des Absatzes 38 und die Position der Kehle 40 sind dabei so aufeinander abgestimmt, dass zwischen der Kehle 40 und der Fußfläche 40' des Absatzes 38 ein Abstand verbleibt, der mindestens gleich der Querschnittsdicke des O-Rings 41 ist.

Der Außendurchmesser Da der Umfangsfläche 39 entspricht dabei bis auf ein geringes Untermaß dem Innendurchmesser Di des inneren Absatzes 33 der Adapterringe 4 - 8. Die Adapterringe 4 - 7 lassen sich dementsprechend mit ihrem jeweiligen äußeren Absatz 38 in den inneren Absatz 33 des jeweils nächstbenachbart angeordneten Adapterrings 5 - 8 einschieben. Gleichzeitig entspricht die Breite des inneren Absatzes 33 mindestens der Hälfte der Breite Ba des äußeren Absatzes 38 der Adapterringe 4-8. Die Gesamtbreite Br der Adapterringe 4-8 ist jeweils größer als die Breite B der Umfangsnuten 12 - 16 und so abgemessen, dass die Adapterringe 4-8 im auf den Verteilkörper 2 aufgeschobenem Zustand ineinandergreifen und nach Art einer Hülse den Verteilkörper 2 umgeben. Ihre innere Ringnut 34 ist dabei jeweils einer der Umfangsnuten 12 - 16 des Verteilkörpers 2 zugeordnet.

Das Abschlussstück 9 weist auf seiner der rückwärtigen Stirnseite 25 des Verteilkörpers 2 zugeordneten Stirnseite eine trichterartige Vertiefung 42 auf, die die auf der Stirnseite 25 angeordneten Mündungsöffnungen der direkt zur Stirnseite 25 führenden Zuströmbohrungen 27 des Verteilkörpers 2 abdeckt. Die Vertiefung 42 geht über in eine Abströmbohrung, deren Durchmesser mindestens dreimal so groß ist wie der Durchmesser der Zuströmbohrungen 27. Die Abströmbohrung mündet in einer in die Umfangsfläche des Abschlussstücks 9 eingeformte Umfangsnut 43. Des Weiteren ist ausgehend von der dem Verteilkörper 2 zugeordneten Stirnseite des Abschlussstücks 9 in das Anschlussstück ein umlaufender äußerer Absatz 44 eingeformt, in dessen Fußfläche zusätzlich eine umlaufende Nut 45 eingebracht ist. Der Außendurchmesser der Umfangsfläche des Absatzes 44 entspricht dabei dem Außendurchmesser des Verteilkörpers 2. Gleichzeitig ist die Breite der Nut 45 so bemessen, dass der dem Anschlussstück 9 zugeordnete Adapterring 16 mit dem Abschnitt, in dem sein äußerer Absatz 38 ausgebildet ist, in die Nut 45 eingeschoben werden kann. Die Nut 45 ist dabei so tief, dass sie die Kehle 40 des Adapterrings 16 vollständig aufnehmen kann.

Das Anschlussstück 3 ist nach Art eines Rohres ausgebildet und weist eine Länge auf, die um ein Vielfaches größer ist als die Länge der Verteilkammer 2. In das Anschlussstück 3 ist dabei eine Versorgungsleitung 46 eingeformt, deren Durchmesser um ein Vielfaches größer ist als der Durchmesser der Zu- und Abströmbohrungen der Verteilkammer 2.

Die Versorgungsleitung 46 mündet in eine in die dem Verteilkörper 2 zugeordnete Stirnseite des Anschlussstücks 3 eingeformte, trichterförmige Ausnehmung 47. Der Übergang 48 von der Versorgungsleitung 46 in die Ausnehmung 47 ist dabei scharfkantig ausgebildet, so dass entlang der Innenwand der Versorgungsleitung 46 strömender, beispielsweise durch einen in der Versorgungsleitung 46 turbulent strömenden Luftstrom A vorangetriebener zähflüssiger Schmierstoff S an diesem Übergang tröpfchenweise abreißt. Die Schmierstofftropfen prallen dann mit hoher kinetischer Energie auf die Prallfläche 29 an der Stirnseite 24 des Verteilkörpers 2 und verteilen sich darauf zu einem Film mit gleichmäßiger Dicke, der in Folge der ihm nach wie vor innewohnenden kinetischen Energie in radialer Richtung auseinandertreibt. Der Schmierstoff gelangt so in gleichförmiger Verteilung in die Eintrittsöffnungen 28,28',28" der Zuströmbohrungen, durch die er dann wieder vom weiterhin turbulent strömenden, in die jeweilige Einrittsöffnung gelangenden Luftstrom weiter getrieben wird.

Ausgehend von der dem Verteilkörper 2 zugeordneten Stirnseite ist in die trichterförmige Ausnehmung 47 ein umlaufender innerer Absatz eingeformt, dessen Innendurchmesser bis auf ein geringes Außenmaß dem Außendurchmesser des Verteilkörpers 2 entspricht.

Die Vorrichtung 1 ist zur Montage in einem hier nur in einem kleinen Ausschnitt angedeuteten Maschinengestell 49 bestimmt, bei dem es sich beispielsweise um das Gestell eines Warm- oder Kaltwalzgerüstes handelt.

Die Verteilvorrichtung 1 hat in dem Maschinengestell 49 die Aufgabe, den durch die Versorgungsleitung 46 anströmenden Schmierstoff/Luftstrom S auf sechs über jeweils eine Anschlussleitung 50, 51, 52, 3, 54, 55 an die Verteileinrichtung 1 angeschlossene, hier nicht gezeigte Unterverteiler gleicher Bauart vorzuverteilen.

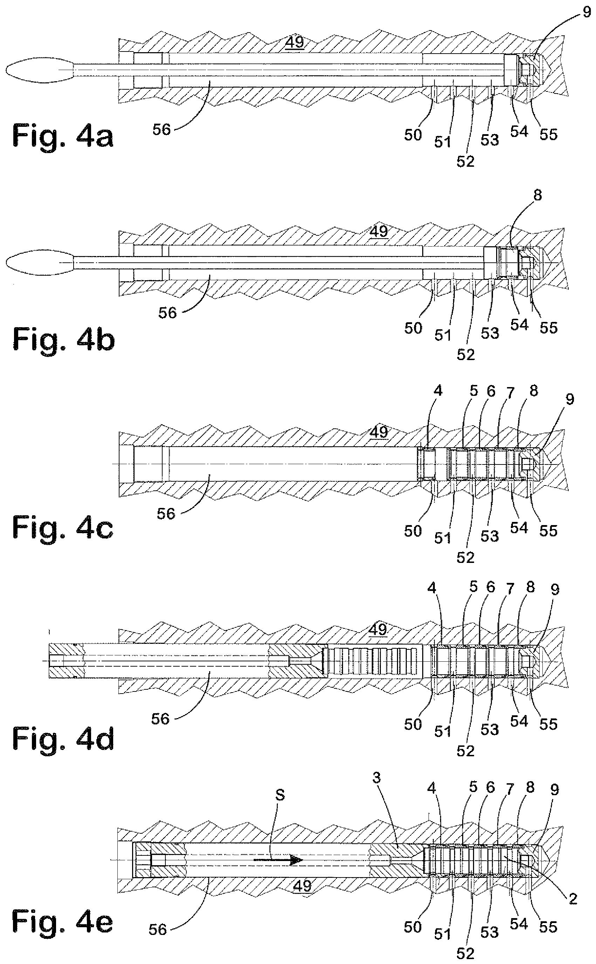

Für die Montage der Vorrichtung 1 wird zunächst mittels einer Stange das Abschlussstück 9 in eine dem Maschinengestell M vorbereitete Aufnahmebohrung 56 großer Länge mittels einer Stange eingeschoben, bis es mit seiner endseitigen Stirnfläche am Ende der Aufnahmebohrung 56 sitzt. Seine Umfangsnut 43 ist in dieser Position fluchtend zu der in das Maschinengestell 9 eingeformten Anschlussleitung 55 angeordnet, während seine trichterförmige Ausnehmung 47 in Richtung der Öffnung der Aufnahmebohrung 56 zeigt (Fig. 4a).

Anschließend werden nacheinander die Adapterringe 4-8 in die Aufnahmebohrung 56 eingeschoben. Dabei trägt jeder der Adapterringe 4-8 eine auf seine Kehle 40 aufgeschobene O-Ring-Dichtung 41.

Trifft der Adapterring 8 mit seinem den O-Dichtring 41 tragenden Absatzabschnitt auf das Abschlussstück 9, so dringt der betreffende Absatzabschnitt in die Nut 45 ein und der O-Ring 41 wird aus der Kehle 40 hinaus gegen die Fußfläche 40' des Absatzes 38 gedrückt. Gleichzeitig legt sich der O-Ring 41 dicht an die Innenfläche der Aufnahmebohrung 56 an (Fig. 4b).

In entsprechender Weise werden nun nacheinander die auf den Adapterring 8 folgenden Adapterringe 4 - 7 mit ihren die jeweilige O-Ring-Dichtung 41 tragenden Absatzabschnitt in den inneren Absatz 33 des jeweils vorangehend in die Aufnahmebohrung 56 eingeschobenen Adapterrings 5-8 eingeschoben und der jeweilige O-Ring 41 zur dichten Anlage an die Innenfläche der Aufnahmebohrung 56 gebracht. In seiner Endposition ist jeder der Adapterringe 4-8 mit seiner jeweiligen äußeren Ringnut 46 fluchtend zu einer der Anschlussleitungen 50 - 54 ausgerichtet (Fig. 4c).

Anschließend wird der bereits am Anschlussstück 3 vormontierte Verteilkörper 2, in dessen Nuten 17, 18 jeweils eine O-Ring-Dichtung 19 eingelegt ist, mit dem Anschlussstück 3 in die Aufnahmebohrung 56 geschoben, bis der Verteilkörper 2 mit seiner rückwärtigen Stirnseite 25 dicht an der mit der trichterförmigen Ausnehmung 47 versehenen Stirnseite des Abschlussstücks 9 sitzt. Die O-Ring-Dichtungen 19 liegen nun dicht an der Innenfläche des ihnen jeweils zugeordneten Adapterrings 4-8 an. Gleichzeitig sind die äußeren Umfangsnuten 12-16 des Verteilkörpers 2 jeweils fluchtend zu einer der inneren Ringnuten 34 der Adapterringe 4-8 angeordnet (Figuren 4d, 4e).

Die Demontage der Vorrichtung 1 kann auf ebenso einfache Weise in umgekehrter Reihenfolge vorgenommen werden.
- 1: Verteilvorrichtung
- 2: Verteilkörper
- 3: Anschlussstück
- 4-8: Adapterringe
- 9: Abschlussstück
- 10,11: Teilkörper des Verteilkörpers 2
- 12-16: Umfangsnuten
- 17, 18: umlaufende Nut
- 19: O-Ringdichtung
- 20, 21: umlaufende Stege
- 22: Abströmbohrung
- 23: Mündungsöffnung der Abströmbohrung 22
- 24: vordere Stirnseite des Verteilkörpers 2
- 25: rückwärtige Stirnseite des Verteilkörpers 2
- 26,27: Zuströmbohrungen
- 28, 28', 28": Eintrittsöffnungen der Zuströmbohrungen
- 29: Prallfläche
- 30: Stifte
- 31: Innenumfangsfläche der Adapterringe 4-8
- 32: vordere Stirnseite der Adapterringe 4-8
- 33: innerer Absatz der Adapterringe 4-8
- 34: innere Ringnut der Adapterringe 4-8
- 35: Durchtrittsöffnungen der Adapterringe 4-8
- 36: äußere Ringnut der Adapterringe 4-8
- 37: rückwärtige Stirnseite der Adapterringe 4-8
- 38: äußerer Absatz der Adapterringe 4-8
- 39: Umfangsfläche des Absatzes 38
- 40: Kehle
- 40': Fußfläche des Absatzes 38
- 41: O-Ring-Dichtung
- 42: Vertiefung
- 43: Umfangsnut des Abschlussstücks 9
- 44: äußerer Absatz des Abschlussstücks 9
- 45: Umfangsnut des Abschlussstücks 9
- 46: Versorgungsleitung
- 47: trichterförmige Ausnehmung
- 48: Übergang der Versorgungsleitung 46 in die Ausnehmung 47
- 49: Maschinengestell
- 50-55: Anschlussleitungen
- 56: Aufnahmebohrung des Maschinengestells 49
- α: Winkelabstände
- A: Luftstrom
- B: Breite der Umfangsnuten 12 - 16
- Ba: Breite des Absatzes 38
- Da: Außendurchmesser der Umfangsfläche 39
- Di: Innendurchmesser des Absatzes 33
- F: Förderrichtung
- L: Längsachse des Verteilkörpers 2
- S: Schmierstoffstrom

## Patentansprüche

1. Vorrichtung zum Aufteilen eines mittels eines Gasstroms, insbesondere eines Luftstroms, geförderten Schmierstoffstroms (S) mit einem Verteilkörper (2), der eine Vielzahl von Zuströmbohrungen (26,27), die von seiner einen Stirnfläche (24) ausgehen und sich längs seiner Längsachse (L) und achsparallel zueinander erstrecken, und Abströmbohrungen (22) aufweist, die jeweils mit einer der Zuströmbohrungen (26) verbunden sind und auf einer Umfangsfläche des Verteilkörpers (2) münden, wobei die Vorrichtung (1) dazu vorgesehen ist, in eine Öffnung (56) eines Maschinengestells (49) eingesetzt zu werden, deren Innendurchmesser größer ist als der Außendurchmesser des Verteilkörpers (2), **dadurch gekennzeichnet, dass** zum Anpassen des Außendurchmessers der Vorrichtung an den Innendurchmesser der Öffnung (56) mindestens einer der Abströmbohrungen (22) ein auf den Verteilkörper (2) aufgeschobener Adapterring (4-8) zugeordnet ist, dessen Breite eine Teillänge des Verteilkörpers (2) abdeckt, die größer ist als der Durchmesser der Abströmöffnung (23) der ihm jeweils zugeordneten Abströmbohrung (22), und der mindestens eine Durchtrittsöffnung (35) aufweist, durch die der aus der ihm zugeordneten Abströmbohrung (22) austretende Schmierstoff/Gasstrom (S) tritt.

2. Vorrichtung nach Anspruch 1, **dadurch gekennzeichnet, dass** jeder der Abströmbohrungen (22) jeweils ein Adapterring (4-8) zugeordnet ist.

3. Vorrichtung nach Anspruch 2, **dadurch gekennzeichnet, dass** die Adapterringe (4-8) dicht an dicht angeordnet sind.

4. Vorrichtung nach einem der voranstehenden Ansprüche, **dadurch gekennzeichnet, dass** jeder Adapterring (4-8) mit seiner Innenumfangsfläche über jeweils eine Dichtung (19) gegenüber der äußeren Umfangsfläche des Verteilkörpers (2) abgedichtet ist.

5. Vorrichtung nach einem der voranstehenden Ansprüche, **dadurch gekennzeichnet, dass** jeder Adapterring (4-8) an seinem äußeren Umfang eine Dichtung (41) trägt.

6. Vorrichtung nach einem der voranstehenden Ansprüche, **dadurch gekennzeichnet, dass** in die Außenumfangsfläche mindestens eines der Adapterringe (4-8) ein umlaufender äußerer Absatz (38) eingeformt ist, der an die eine Stirnseite dieses Adapterrings (4-8) angrenzt, und **dass** in die Innenumfangsfläche mindestens eines der Adapterringe (4-8) ein an eine der Stirnseiten dieses Adapterrings (4-8) angrenzender umlaufender innerer Absatz (33) eingeformt ist, dessen Innendurchmesser an den Außendurchmesser des äußeren umlaufenden Absatzes (38) des anderen Adapterrings (4-8) angepasst ist.

7. Vorrichtung nach Anspruch 6, **dadurch gekennzeichnet, dass** mehr als zwei Adapterringe (4-8) vorhanden sind und mindestens einer der Adapterringe (4-8) einen an seine eine Stirnseite angrenzenden äußeren Absatz (38) und einen an seine andere Stirnseite angrenzenden inneren Absatz (33) aufweist.

8. Vorrichtung nach einem der Ansprüche 6 oder 7, **dadurch gekennzeichnet, dass** in die Umfangsfläche des äußeren Absatzes (38) mindestens eines der Adapterringe (4-8) eine umlaufende Kehle (40) eingeformt ist, die als Sitz für einen O-Ring (41) dient.

9. Vorrichtung nach Anspruch 8, **dadurch gekennzeichnet, dass** die zwischen der Kehle (40) und der Fußfläche (40') des Absatzes (38) verbleibende Breite der Umfangsfläche (39) des äußeren Absatzes (38) mindestens so groß ist wie die Breite der Kehle (40).

10. Vorrichtung nach einem der voranstehenden Ansprüche, **dadurch gekennzeichnet, dass** in die äußere Umfangsfläche (39) mindestens eines der Adapterringe (4-8) eine Ringnut (36) eingeformt, in deren Grund die Durchtrittsöffnung (35) mündet.

11. Vorrichtung nach einem der voranstehenden Ansprüche, **dadurch gekennzeichnet, dass** in die innere Umfangsfläche mindestens eines der Adapterringe (4-8) eine Ringnut (34) eingeformt ist, in deren Grund die Durchtrittsöffnung (35) mündet.

12. Vorrichtung nach einem der voranstehenden Ansprüche, **dadurch gekennzeichnet, dass** die Abströmöffnungen (23) der Abströmbohrungen (22) des Verteilkörpers (2) jeweils im Grund einer in die äußere Umfangsfläche des Verteilkörpers (2) eingeformten Umfangsnut (12-16) angeordnet sind.

13. Vorrichtung nach einem der voranstehenden Ansprüche, **dadurch gekennzeichnet, dass** der Verteilkörper (2) in mindestens zwei Teilkörper (10, 11) geteilt ist, die mittels eines Spannmittels miteinander dicht verkoppelt sind.

14. Vorrichtung nach Anspruch 13, **dadurch gekennzeichnet, dass** an den Teilkörpern (10,11) des Verteilkörpers (2) jeweils ein Formelement vorgesehen ist, welches die lagerichtige Anordnung der Teilkörper (10, 11) im miteinander verspannten Zustand sichert.

15. Vorrichtung nach einem der voranstehenden Ansprüche, **dadurch gekennzeichnet, dass** mindestens eine der Zuströmbohrungen (26,27) des Verteilkörpers auf der Stirnseite (25) des Verteilkörpers mündet, die der mit den Eintrittsöffnungen (28,28'28") der Zuströmbohrungen (26, 27) versehenen Stirnseite (24) gegenüberliegt, und **dass** an dieser Stirnseite (25) ein Abschlussstück zum Ableiten des aus der Zuströmbohrung (27) austretenden Gas/Schmierstoffstroms (S) angeschlossen ist.

16. Maschine mit Schmierstellen und einem Maschinengehäuse (M), in das eine längliche Aufnahmebohrung (56) eingeformt ist, in die eine gemäß einem der Ansprüche 1 bis 15 ausgebildete Vorrichtung (1) eingeschoben ist, wobei Anschlussleitungen (50-55) von den Schmierstellen zu der Aufnahmebohrung (56) führen und jeder der Schmierstellen jeweils mindestens eine der Durchtrittsöffnungen (35) der Adapterringe (4-8) zugeordnet ist.

## Claims

1. Device for distributing a lubricant flow (S) transported by means of a gas flow, in particular an air flow, with a distributor body (2) having a plurality of inflow bores (26, 27) extending from its one end face (24) and along its longitudinal axis (L) and axially parallel to each other, and outflow bores (22) respectively connected to one of the inflow bores (26) and which open on a circumferential surface of the distributor body (2), wherein the device (1) is provided to be inserted into an opening (56) of a machine frame (49), whose inner diameter is larger than the outer diameter of the distributor body (2), **characterised in that** an adapter ring (4-8) slipped onto the distributor body (2) is associated with at least one of the outflow bores (22) for adjusting the outer diameter of the device to the inner diameter of the opening (56), said adapter ring (4-8) having a width that covers a partial length of the distributor body (2), which is larger than the diameter of the outflow opening (23) of the respectively associated outflow bore (22), and which has at least one passage opening (35) through which the lubricant/gas flow (S) emerging from its associated outflow bore (22) enters.

2. Device according to Claim 1, **characterised in that** each of the outflow bores (22) is respectively associated with an adapter ring (4-8).

3. Device according to Claim 2, **characterised in that** the adapter rings (4-8) are arranged close together.

4. Device according to any one of the preceding claims, **characterised in that** each adapter ring (4-8) is sealed with its inner circumferential surface via a respective seal (19) relative to the outer circumferential surface of the distributor body (2).

5. Device according to any one of the preceding claims, **characterised in that** each adapter ring (4-8) carries a seal (41) on its outer circumference.

6. Device according to any one of the preceding claims, **characterised in that** a circumferential outer shoulder (38) is moulded into the outer circumferential surface of at least one of the adapter rings (4-8), which adjoins the one end face of this adapter ring (4-8), and **in that** a circumferential inner shoulder (33) adjoining one of the end faces of this adapter ring (4-8) is moulded into the inner circumferential surface of at least one of the adapter rings (4-8), the inner diameter of which is adapted to the outer diameter of the outer circumferential shoulder (38) of the other adapter ring (4-8).

7. Device according to Claim 6, **characterised in that** more than two adapter rings (4-8) are provided and at least one of the adapter rings (4-8) has an outer shoulder (38) adjoining its one end face and an inner shoulder (33) adjoining its other end face.

8. Device according to any one of Claims 6 or 7, **characterised in that** a circumferential groove (40) is moulded into the circumferential surface of the outer shoulder (38) of at least one of the adapter rings (4-8), which serves as a seat for an O-ring (41).

9. Device according to Claim 8, **characterised in that** the width of the circumferential surface (39) of the outer shoulder (38) remaining between the groove (40) and the foot surface (40') of the shoulder (38) is at least equal to the width of the groove (40).

10. Device according to any one of the preceding claims, **characterised in that** an annular groove (36) is moulded into the outer circumferential surface (39) of at least one of the adapter rings (4-8), and the passage opening (35) opens into the base of said annular groove (36).

11. Device according to any one of the preceding claims, **characterised in that** an annular groove (34) is moulded into the inner circumferential surface of at least one of the adapter rings (4-8), and the passage opening (35) opens into the base of said annular groove (34).

12. Device according to any one of the preceding claims, **characterised in that** the outflow openings (23) of the outflow bores (22) of the distributor body (2) are respectively arranged in the base of a circumferential groove (12-16) moulded into the outer circumferential surface of the distributor body (2).

13. Device according to any one of the preceding claims, **characterised in that** the distributor body (2) is divided into at least two partial bodies (10, 11) which are tightly coupled to one another by means of a clamping means.

14. Device according to Claim 13, **characterised in that** a mould element is respectively provided on the partial bodies (10, 11) of the distributor body (2), which ensures the correct position arrangement of the partial bodies (10, 11) when clamped together.

15. Device according to any one of the preceding claims, **characterised in that** at least one of the inflow bores (26,27) of the distributor body opens on the end face (25) of the distributor body, which is opposite the end face (24) provided with the inlet openings (28, 28' 28") of the inflow bores (26, 27), and **in that** a closing piece is connected on this end face (25) for discharging the gas/lubricant flow (S) exiting from the inflow bore (27).

16. Machine with lubrication points and a machine housing (M), into which an elongated receiving bore (56) is moulded, into which a device (1) designed according to any one of Claims 1 to 15 is inserted, wherein connection lines (50-55) lead from the lubrication points to the receiving bore (56) and respectively at least one of the passage openings (35) of the adapter rings (4-8) is associated with each of the lubrication points.

## Revendications

1. Dispositif de répartition d'un flux de lubrifiant (S) transporté au moyen d'un flux de gaz, notamment d'un flux d'air, avec un corps de distribution (2), lequel possède une pluralité d'orifices d'arrivée de flux (26, 27), qui sortent de sa surface frontale (24) et s'étendent le long de son axe longitudinal (L) et avec parallélisme des axes les uns par rapport aux autres, et des orifices de sortie de flux (22), qui sont respectivement reliés à l'un des orifices d'arrivée de flux (26) et débouchent sur une surface périphérique du corps de distribution (2), le dispositif (1) étant conçu pour être inséré dans une ouverture (56) d'un bâti de machine (49) dont le diamètre intérieur est supérieur au diamètre extérieur du corps de distribution (2), **caractérisé en ce que**, pour adapter le diamètre extérieur du dispositif au diamètre intérieur de l'ouverture (56), à au moins l'un des orifices de sortie de flux (22) est associée une bague d'adaptation (4-8), laquelle étant emmanchée sur le corps de distribution (2) et dont la largeur couvre une longueur partielle du corps de distribution (2), laquelle est supérieure au diamètre de l'ouverture de sortie de flux (23) de l'orifice de sortie de flux (22) qui lui est respectivement associé, et qui possède au moins une ouverture de traversée (35) à travers laquelle passe le flux de lubrifiant/gaz (S) qui sort de l'orifice de sortie de flux (22) qui lui est associé.

2. Dispositif selon la revendication 1, **caractérisé en ce qu'**une bague d'adaptation (4-8) est respectivement associée à chacun des orifices de sortie de flux (22).

3. Dispositif selon la revendication 2, **caractérisé en ce que** les bagues d'adaptation (4-8) sont disposées côte à côte.

4. Dispositif selon l'une des revendications précédentes, **caractérisé en ce que** chaque bague d'adaptation (4-8) est rendue étanche par sa surface périphérique intérieure par rapport à la surface périphérique extérieure du corps de distribution (2), respectivement par le biais d'une garniture d'étanchéité (19).

5. Dispositif selon l'une des revendications précédentes, **caractérisé en ce que** chaque bague d'adaptation (4-8) comporte une garniture d'étanchéité (41) au niveau de son pourtour extérieur.

6. Dispositif selon l'une des revendications précédentes, **caractérisé en ce que** dans la surface périphérique extérieure d'au moins l'une des bagues d'adaptation (4-8) est façonné un talon extérieur circonférentiel (38), lequel est adjacent à un premier côté frontal de cette bague d'adaptation (4-8), et **en ce que** dans la surface périphérique intérieure d'au moins l'une des bagues d'adaptation (4-8) est façonné un talon intérieur circonférentiel (33) adjacent l'un des côtés frontaux de cette bague d'adaptation (4 - 8), duquel talon intérieur le diamètre intérieur est adapté au diamètre extérieur du talon extérieur circonférentiel (38) de l'autre bague d'adaptation (4-8).

7. Dispositif selon la revendication 6, **caractérisé en ce que** plus de deux bagues d'adaptation (4-8) sont présentes et au moins l'une des bagues d'adaptation (4-8) possède un talon extérieur (38) adjacent à son premier côté frontal et un talon intérieur (33) adjacent à son autre côté frontal.

8. Dispositif selon l'une des revendications 6 ou 7, **caractérisé en ce que** dans la surface périphérique du talon extérieur (38) d'au moins l'une des bagues d'adaptation (4-8) est façonnée une gorge circonférentielle (40) qui sert de siège pour un joint torique (41).

9. Dispositif selon la revendication 8, **caractérisé en ce que** la largeur de la surface périphérique (39) du talon extérieur (38) qui reste entre la gorge (40) et la surface du pied (40') du talon (38) est au moins aussi grande que la largeur de la gorge (40) .

10. Dispositif selon l'une des revendications précédentes, **caractérisé en ce que** dans la surface périphérique extérieure (39) d'au moins l'une des bagues d'adaptation (4-8) est façonnée une rainure annulaire (36) dans le fond de laquelle débouche l'ouverture de traversée (35).

11. Dispositif selon l'une des revendications précédentes, **caractérisé en ce que** dans la surface périphérique intérieure d'au moins l'une des bagues d'adaptation (4-8) est façonnée une rainure annulaire (34) dans le fond de laquelle débouche l'ouverture de traversée (35).

12. Dispositif selon l'une des revendications précédentes, **caractérisé en ce que** les ouvertures de sortie de flux (23) des orifices de sortie de flux (22) du corps de distribution (2) sont respectivement disposées dans le fond d'une rainure périphérique (12-16) façonnée dans la surface périphérique extérieure du corps de distribution (2) .

13. Dispositif selon l'une des revendications précédentes, **caractérisé en ce que** le corps de distribution (2) est divisé en au moins deux corps partiels (10, 11) qui sont accouplés de manière étanche l'un à l'autre par le biais d'un moyen de serrage.

14. Dispositif selon la revendication 13, **caractérisé en ce qu'**au niveau des corps partiels (10, 11) du corps de distribution (2) se trouve respectivement un élément de forme qui assure l'arrangement en position correcte des corps partiels (10, 11) dans l'état serré l'un à l'autre.

15. Dispositif selon l'une des revendications précédentes, **caractérisé en ce qu'**au moins l'un des orifices de sortie d'arrivée de flux (26,27) du corps de distribution débouche sur le côté frontal (25) du corps de distribution qui est à l'opposé du côté frontal (24) pourvu des ouvertures d'entrée (28, 28', 28") des orifices d'arrivée de flux (26, 27), et **en ce qu'**une pièce de raccordement destinée à évacuer le flux de gaz/lubrifiant (S) qui sort de l'orifice d'arrivée de flux (27) est raccordée à ce côté frontal (25).

16. Machine comprenant des emplacements de lubrification et un carter de machine (M) dans lequel est façonné un orifice d'accueil (56) allongé, dans lequel orifice est inséré un dispositif (1) configuré selon l'une des revendications 1 à 15, des conduites de raccordement (50-55) menant des emplacements de lubrification à l'orifice d'accueil (56), et au moins l'une des ouvertures de traversée (35) des bagues d'adaptation (4-8) étant respectivement associée à chacun des emplacements de lubrification.
